# EUROPEAN PATENT APPLICATION

(11) **EP 3 462 749 A1**
(43) Date of publication of application: **03.04.2019**
(21) Application number: 18306274.4
(22) Date of filing: 28.09.2018
(51) Int. Cl.: H04N 21/438, H04N 21/442, H04N 21/45, H04N 21/475, H04N 21/482

(54) **FAST ACCESS AND CONTROL OF AUDIO/VISUAL EQUIPMENT USING A USER INTERFACE**

(30) Priority: 28.09.2017 US 201762564418 P
(71) Applicant: InterDigital CE Patent Holdings, 75017 Paris (FR)
(72) Inventor: XING, Minging, Indianapolis, IN Indiana 46290 (US)
(74) Representative: Huchet, Anne

(57) **Abstract**

A method and user interface is provided for creating a channel list. The method includes obtaining at least one of the number of times each channel of a plurality of channels associated with a device is selected via a user interface and the length of time each channel is selected. It also includes storing a channel set including at least one channel based on at least one of the determined number of times each channel is selected for viewing and determined length of time each channel of the device is selected for viewing.

## Description

### TECHNICAL FIELD

The present disclosure generally relates to consumer electronics and, more specifically, to techniques for accessing and controlling audio visual equipment using a user interface.

### BACKGROUND

Modern audio/visual equipment uses the high-definition multimedia interface (HDMI) to communicate between content sources such as, e.g., a cable box or media player, and a visual display and/or speaker. At the start of a main HDMI switch device (such as a switch, a home cinema amplifier, or a television itself), the HDMI input that is initially active is rarely the one desired by the user. For example, the initial input selection may be based on a default (such as, e.g., the first input in a sequence), the last selected input, or the first input having an active device connected.

Unfortunately, in recent years, the number of different audio/visual channels have grown tremendously. An average consumer may have a variety of consumer electronics including cable TV, Satellite TV, Internet TV, DVDs, TIVOs, and many others available to them in the household that are being used on a daily basis. In addition, the number of channels available on each of these devices has also grown tremendously. Remembering and entering one's favorite channel numbers is always a challenge. Consequently, techniques are desirous that can help manage user control of such devices with least amount of efforts.

### SUMMARY

In one embodiment, a method is provided for obtaining at least one of the number of times each channel of a plurality of channels associated with a device is selected via a user interface and the length of time each channel is selected. This channel set is then stored, including at least one channel based on at least one of the determined number of times each channel is selected for viewing and determined length of time each channel of said device is selected for viewing.

In another embodiment, an apparatus is provided which includes one or more processors. The processors are configured for obtaining at least one of the number of times each channel of a plurality of channels associated with a device is selected via a user interface and the length of time each channel is selected. This channel set is then stored, via the processors, including at least one channel based on at least one of the determined number of times each channel is selected for viewing and determined length of time each channel of said device is selected for viewing.

### BRIEF DESCRIPTION OF THE DRAWINGS

The teachings of the present disclosure can be readily understood by considering the following detailed description in conjunction with the accompanying drawings, in which:
FIG. 1 is a block diagram of a home theater system in accordance with one embodiment;
FIG. 2 is a block diagram of a home theater system in accordance with one embodiment;
FIG. 3 is a block diagram of a home theater system in accordance with one embodiment;
FIG. 4 is a block diagram of an exemplary depiction of a user interface in accordance with one embodiment;
FIG. 5 is a table showing exemplary depiction of a user interface in accordance with one embodiment; and
FIG. 6 is a flow diagram block of a method in accordance with one embodiment; and
FIG. 7 is a block diagram of a processing system in accordance with the present embodiment.

It should be understood that the drawings are for purposes of illustrating the concepts of the invention and are not necessarily the only possible configuration for illustrating the invention. To facilitate understanding, identical reference numerals have been used, where possible, to designate identical elements that are common to the figures.

### DETAILED DESCRIPTION OF PREFERRED EMBODIMENTS

One embodiment of the present principles allows a user to gain face access to the user's favorite channels, most watched or most recently watched channels using a remote control or other user interfaces that can also track user habits to manage access and even display what user will want to be displayed. To accomplish this, the present embodiments make use of the high-definition multimedia interface (HDMI) consumer electronic control (CEC) protocol, which communicates device identification information and allows connected devices to issue commands to other connected devices.

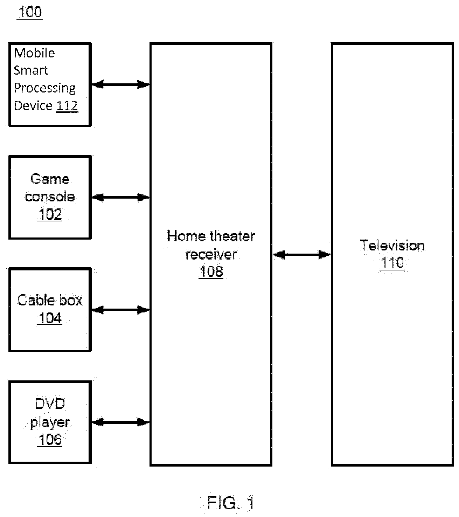

Referring now to FIG. 1, an exemplary home theater arrangement 100 is shown. A variety of devices are connected to home theater receiver 108, including for example a game console 102, a cable box 104, and a DVD player 106. The receiver 108, in turn, is connected to a television 110. In this arrangement 100, a smart device such as a mobile device like a smart phone, a lap top computer, a tablet or other such devices can, referenced generally as device 112, can also be connected to the receiver 108. The devices can be controlled by a single user interface (such as a remote control) or have multiple ones. However, in one embodiment, one user interface can be used as a master manager of the others and can be used generally like a universal controller. The smart processing device 112, game console 102, the cable box 104, the DVD player 106, the receiver 108, and the television 112 are referred to collectively herein as the "connected devices," as they are all connected to one another, directly or indirectly, through a connection medium and protocol such as, e.g., HDMI.

It should be understood that the present embodiments are not limited to a home theater arrangement but may be employed in any system having multiple audio/visual devices. For example, the same principles apply to a purely audio system without any visual display at all, and any of a variety of content providing devices may be used instead of those listed. The present embodiments are selected solely for the sake of explanation and should not be construed as being in any way limiting.

It should also be understood that, although it is specifically contemplated that all of the devices are connected to one another via HDMI connections and communicate using the HDMI CEC protocol, any appropriate interconnection system and communication protocol may be used instead. For example, the devices may be connected to one another via USB, Ethernet, or any other appropriate wired or wireless communication medium and protocol.

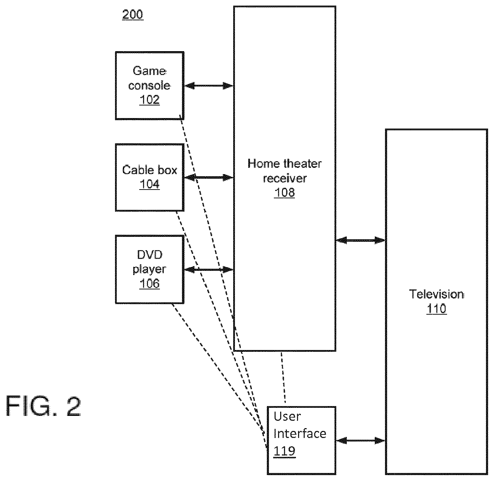

Referring now to FIG. 2, an alternative home theater arrangement 200 is shown. In this arrangement 200, a user interface 119 is shown that can either be connected directly to the television 110 or be connected and/or controlling any of the other devices shown.

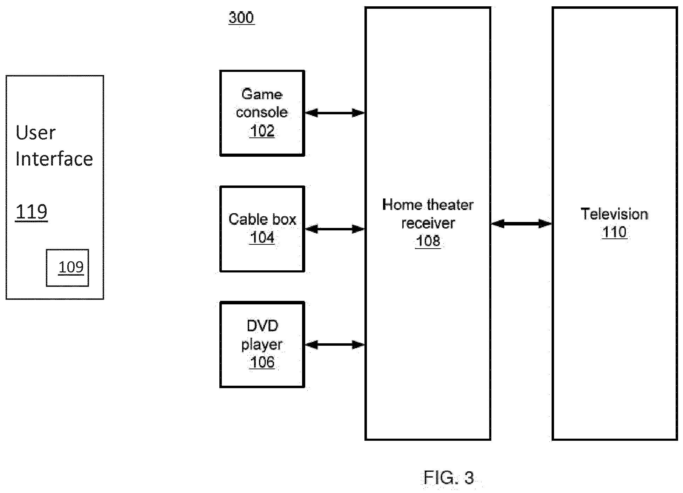

Referring now to FIG. 3, an alternative home theater arrangement 300 is shown. In this arrangement 300, the user interface 119 is a smart module having a processor 109 that can control any/or all of the devices shown.

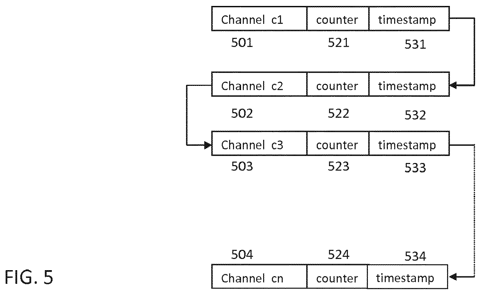

Figure 5 provides a block diagram for an exemplary user interface. As mentioned earlier, nowadays the number of channels available on cable TV, Satellite TV, Internet TV, etc. has grown tremendously. For example, on U-verse TV, there are hundreds of channels to select from. However, most users will often watch a very limited number of channels within a certain period of time. Remembering and entering one's favorite channel numbers is always a challenge. Many user interfaces (i.e. remote controls) provide a "Last" or "Go Back" button to allow a user to go back to only the last channel he/she watched. In an attempt to overcome this limitation, this invention allows a user, using a remote control without adding any new key, to quickly go through his/her favorite channels based on his/her viewing history, most watched channels or most recently watched channels for example, and select the one the user is intending to watch. It is possible that to help a user to quickly access a channel that is last watched, the user interface be programmed to provide a "Last" or "Go Back" button. However, this is inadequate as it only allows the user to go back to the last channel the user has watched. Therefore, any other channels in the user's viewing history become not accessible.

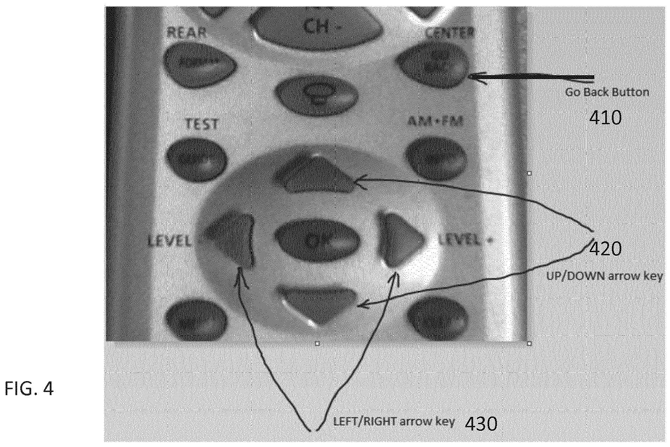

Referring back to the exemplary user interface of Figure 4, the device allows the user to watch different channels on a TV or other devices shown. In this embodiment, each channel associated with each device is separately monitored. In this way, the habits of the user and how much time the user has spent on each device is monitored. When the user has spent at least a minimum amount of time (this can be a threshold or a preselected amount of time, such as 2, 5 or 10 minutes for example) on watching a channel, in one embodiment, that channel is added to the channel list. This will avoid a channel that is only briefly reviewed to be added to the channel list. If a channel to be added to the channel list already exists on the list, a counter indicating the number of times the channel has been watched will be incremented. Also, a timestamp when the channel is last watched is kept for each entry on the channel list. When the user presses the "Last" or "Go Back" button shown as 410, it enters into the "channel history" mode, in which the UP and DOWN arrow keys 420 allow the user to navigate through the most watched channels (channels sorted based on the counter values), while the LEFT and RIGHT arrow keys 430 allow the user to navigate through the most recently watched channels list (channels sorted based on the timestamps). Once in the "channel history" mode, pressing any key other than the arrow keys and "Go Back" or "Last" key 410 deactivates the "channel history" mode. The channel list can be implemented as either a fixed size list or a dynamic linked list. For a fixed size channel list, a channel can be removed based on various strategies for a new channel to be added to the list when it is full. One typical strategy in deciding which channel to be removed from the channel list is which channel has not been watched for the longest time. In this way, in one embodiment, the channel set then is a list including a plurality of channels. This list can include a list of channels determined and selected by the number of times each channel is selected for viewing. In a different embodiment, the same list can also include selections made based on the length of time that the channels (i.e. of a particular device) are selected for viewing.)

Figure 5 provides a table form block diagram that provides the flow of such command function and its control easier. As shown, each Channel c₁ to cₙ defined as 501 to 504 have an associated counter 521 to 524 and a separately set selected time shown as timestamps 531 to 534. In one embodiment, a storage unit or storage location of a memory device is used to keep a database associated with each channel which can then be accessed by the processor 109.

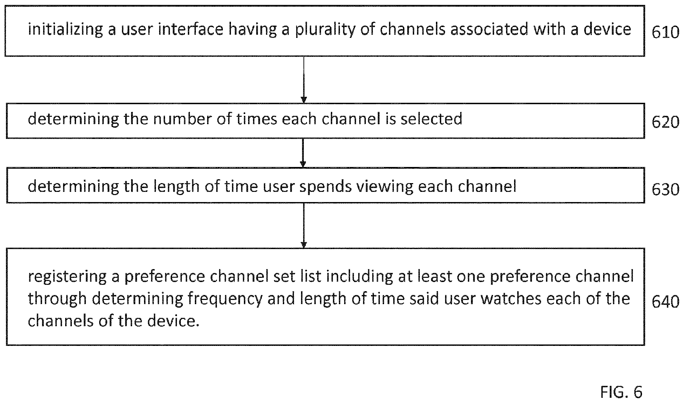

Figure 6 provides an associated flow chart of one methodology for selecting preferred viewing channel (station) in accordance to one embodiment. In step 610, at least one device is initialized that has a plurality of channels. In step 620, a preferred channel list is created by registering a user selection of a channel selection. In step 630, the number of times said channel is selected is determined such as via a processor. In step 630, the length of time a user (or more) spends viewing each channel is determined. In step 640, a preference channel set list including at least one preference channel through which said user most frequently watches a device is then registered. The channel set list includes at least one channel based the number of times each channel is selected for viewing and determined length of time each channel is selected for viewing.

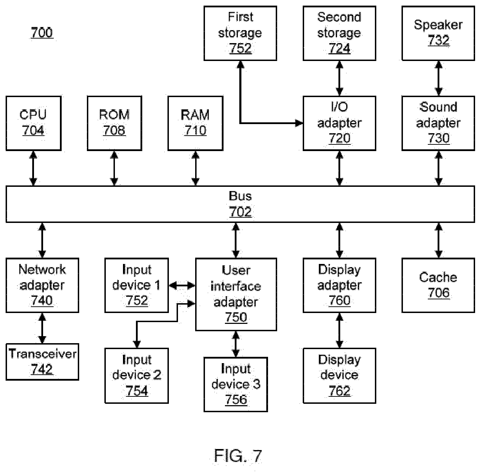

Referring now to FIG. 7, an exemplary processing system 700 is shown which may represent the smart startup module 112. The processing system 700 includes at least one processor (CPU) 704 operatively coupled to other components via a system bus 702. A cache 706, a Read Only Memory (ROM) 708, a Random Access Memory (RAM) 710, an input/output (I/O) adapter 720, a sound adapter 730, a network adapter 740, a user interface adapter 750, and a display adapter 760, are operatively coupled to the system bus 702.

A first storage device 722 and a second storage device 724 are operatively coupled to system bus 702 by the I/O adapter 720. The storage devices 722 and 724 can be any of a disk storage device (e.g., a magnetic or optical disk storage device), a solid state magnetic device, and so forth. The storage devices 722 and 724 can be the same type of storage device or different types of storage devices.

A speaker 732 is operatively coupled to system bus 702 by the sound adapter 730. A transceiver 742 is operatively coupled to system bus 702 by network adapter 740. A display device 762 is operatively coupled to system bus 702 by display adapter 760.

A first user input device 752, a second user input device 754, and a third user input device 756 are operatively coupled to system bus 702 by user interface adapter 750. The user input devices 752, 754, and 756 can be any of a keyboard, a mouse, a keypad, an image capture device, a motion sensing device, a microphone, a device incorporating the functionality of at least two of the preceding devices, and so forth. Of course, other types of input devices can also be used, while maintaining the spirit of the present principles. The user input devices 752, 754, and 756 can be the same type of user input device or different types of user input devices. The user input devices 752, 754, and 756 are used to input and output information to and from system 700.

Of course, the processing system 700 may also include other elements (not shown), as readily contemplated by one of skill in the art, as well as omit certain elements. For example, various other input devices and/or output devices can be included in processing system 700, depending upon the particular implementation of the same, as readily understood by one of ordinary skill in the art. For example, various types of wireless and/or wired input and/or output devices can be used. Moreover, additional processors, controllers, memories, and so forth, in various configurations can also be utilized as readily appreciated by one of ordinary skill in the art. These and other variations of the processing system 700 are readily contemplated by one of ordinary skill in the art given the teachings of the present principles provided herein.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this disclosure and are within the scope of this disclosure.

The foregoing illustrates some of the possibilities for practicing the present principles. Many other embodiments are possible within the scope and spirit of the present principles. It is, therefore, intended that the foregoing description be regarded as illustrative rather than limiting, and that the scope of the invention is given by the appended claims together with their full range of equivalents.

## Claims

1. A method comprising:
obtaining at least one of the number of times each channel of a plurality of channels associated with a device is selected via a user interface and the length of time each channel is selected;
storing a channel set including at least one channel based on at least one of the determined number of times each channel is selected for viewing and determined length of time each channel of said device is selected for viewing.

2. An apparatus comprising:
one or more processors configured for
obtaining at least one at least one of the number of times each channel of a plurality of channels associated with a device is selected via a user interface and the length of time each channel is selected;
storing a channel set including at least one channel based on at least one of the determined number of times each channel is selected for viewing and determined length of time each channel of said device is selected for viewing.

3. The method of claim 1 or apparatus of claim 2, wherein the length of time is measured by a timestamp associated with said channel and the number of times each channel is selected for viewing is measured by a counter.

4. The method of claim 1 or 3 or apparatus of claims 2 or 3, wherein said channel is only included on the said channel set when said length of time exceeds a certain value.

5. The method of any of the claims 1 or 3-4 or apparatus of any of the claims 2-4, wherein said channel set is prioritized based on said number of times each channel is selected.

6. The method of any of the claims 1 or 3-5 or apparatus of any of the claims 2-5, wherein said channel set is dynamically changed and prioritized based on said length of time.

7. The method of any of the claims 1 or 3-6 or apparatus of any of the claims 2-6, wherein said channel set is dynamically changed and prioritized based on said number of times each channel is selected.

8. The method of any of the claims 1 or 3-7 or apparatus of any of the claims 2-7, wherein said channel set has a fixed size.

9. The method of any of the claims 1 or 3-8 or apparatus of any of the claims 2-8, wherein channels can be removed from the channel set.

10. The method of claim 9 or apparatus of claims 9, wherein one or more channels can be removed from the channel set once a maximum capacity has been reached,

11. The method of claim 9 or apparatus of 9, wherein one or more channels can be removed from the channel set based on the number of times a channel is selected for viewing and the last time the channel was selected for viewing.

12. The method of any of the claims 1 or 3-11 or apparatus of any of the claims 2-11, wherein the channel set can be implemented on a dynamic basis and new channels are added on a first in last out basis.

13. The method of any of the claims 1 or 3-12 or apparatus of any of the claims 2-12, wherein a plurality of connected devices provide said channel set.

14. The method of claim 13 or apparatus of claim 13, wherein each of said connected devices are connected to one another via high-definition multimedia interface (HDMI) connections.

15. A non-transitory computer-readable medium storing computer-executable instructions executable to perform the method of any of claims 1 and 3-14.
